# FASCICULE DE BREVET EUROPEEN

(11) **EP 2 608 922 B1**
(45) Date de publication et mention de la délivrance du brevet: **16.12.2015**
(21) Numéro de dépôt: 11755390.9
(22) Date de dépôt: 01.08.2011
(51) Int. Cl.: B23K 31/12, B62D 65/00

(54) **MASQUE DE CONTROLE DE CORDONS DE SOUDURE**
MASKE ZUM PRÜFEN VON SCHWEISSWULSTEN
MASK FOR CHECKING WELD BEADS

(30) Priorité: 25.08.2010 FR 1056772
(43) Date de publication de la demande: 03.07.2013
(73) Titulaire: Peugeot Citroën Automobiles SA, 78140 Vélizy Villacoublay (FR)
(72) Inventeur: PICARD, Guy, F-14123 Ifs/plaine (FR); BARASSIN, Eric, F-14850 Herouvillette (FR); ZOUBKOVA, Tatiana, F-14190 Fierville Bray (FR)
(74) Mandataire: Rosenberg, Muriel Sylvie
(86) Numéro de dépôt international: PCT/FR2011/051852
(87) Numéro de publication internationale: WO 2012/025679

(56) Documents cités:
- WO-A1-2004/109268
- DE-A1-102008 062 866
- FR-A1- 2 707 008

## Description

La présente invention concerne un masque de contrôle visuel de cordons de soudure, en particulier pour le contrôle de composants automobiles.

Les véhicules automobiles comportent généralement un berceau avant supportant le moteur thermique ainsi que des éléments de suspension, formant un ensemble sensiblement plat réalisé par découpe et emboutissage de tôles, qui sont superposées et assemblées entre elles par des cordons de soudure. Pour l'assemblage du berceau, les tôles sont positionnées entre elles par un gabarit, puis un robot de soudure vient réaliser différents cordons suivant un programme défini pour chaque modèle de berceau.

Les berceaux des véhicules automobiles peuvent être soumis à des efforts importants, en particulier dans les virages et les freinages prononcés, où les roues transmettent à la caisse du véhicule des fortes contraintes, et les cordons de soudure sont soumis à des efforts répétés.

Les opérations de soudure réalisées par un robot peuvent subir des dérives ou des aléas difficiles à détecter lors de ces opérations, comme par exemple une variation d'un paramètre ou la présence d'impuretés.

Pour pouvoir assurer la conformité des berceaux par rapport aux exigences définies par les études, afin de garantir leur fiabilité, Il est généralement prévu en fin d'assemblage de chacun des berceaux, un contrôle visuel de manière à contrôler notamment la présence de chaque cordon de soudure, ainsi que son positionnement et sa longueur. Pour effectuer ce contrôle, un opérateur dispose habituellement d'un modèle, et il compare visuellement le nouveau berceau par rapport à ce modèle.

Ce type de contrôle pose en particulier des problèmes de fiabilité, de qualification de l'opérateur et de temps de contrôle. En effet, avec ce procédé il est délicat pour le contrôleur d'évaluer avec précision la conformité des positions de début et de fin des cordons de soudure. De plus le contrôleur doit être qualifié pour effectuer cette opération, et il y passe un temps relativement long. Il y a aussi des risques d'interprétation des résultats, et d'acceptation de pièces défectueuses.

Un autre procédé connu de contrôle de cordon de soudure, présenté notamment par le document FR-A1-2707008, comporte une caméra qui visualise le cordon de soudure éclairé par une source laser, pour ensuite analyser l'image obtenue et la comparer de manière automatique avec des limites enregistrées en mémoire, de manière à vérifier la conformité de ce cordon.

Un problème qui se pose avec ce procédé, est qu'il nécessite une installation relativement complexe et onéreuse. De plus ce procédé qui convient bien pour des formes géométriques simples, est difficile à généraliser pour des formes complexes comme un berceau de véhicule automobile, comprenant de nombreux cordons de soudure réparties en des points variés sur des surfaces courbes de ce berceau.

L'invention a notamment pour but d'éviter ces inconvénients de la technique antérieure, et de proposer un moyen simple et efficace permettant à un opérateur de contrôler de manière rapide et objective des cordons de soudure sur des pièces comportant des formes variées.

Elle propose à cet effet un masque de contrôle de cordons de soudure d'un assemblage constitué de tôles embouties et découpées, fixées entre elles par les cordons de soudure, caractérisé en ce qu'il comprend des formes adaptées pour se positionner de manière précise sur l'assemblage, et recouvrir de près cet assemblage au moins au niveau des cordons de soudure à vérifier, et en ce qu'il comporte des ouvertures permettant de visualiser ces cordons de soudure au travers du masque, ainsi que des repères visuels de contrôle des bords des cordons de soudure définissant à des tolérances, qui sont disposés à proximité de ces ouvertures.

Un avantage du masque de contrôle selon l'invention, est qu'après l'avoir positionné sur l'assemblage à contrôler, il permet à un opérateur de constater de manière rapide notamment les positions des extrémités des cordons de soudure par rapport aux repères visuels de contrôle, qui se trouvent ainsi disposés à proximité immédiate de ces cordons, pour permettre de définir de manière objective la conformité de cet assemblage.

Le masque de contrôle selon l'invention peut en outre comporter une ou plusieurs des caractéristiques suivantes, qui peuvent être combinées entre elles.

Avantageusement, le masque de contrôle comporte des surfaces courbes qui s'ajustent de manière complémentaire sur celles de l'assemblage, pour effectuer le positionnement précis.

Le masque peut aussi comporter des éléments de positionnement fixés dessus, qui s'ajustent sur des contours de l'assemblage pour effectuer le positionnement précis.

Avantageusement, les ouvertures ont une forme allongée suivant un axe, et comportent une largeur sensiblement constante qui est proche de celle du cordon de soudure.

Avantageusement, les repères visuels de contrôle comportent un traçage réalisé sur le côté des fenêtres, formant des traits sensiblement perpendiculaires à l'axe de la fenêtre, qui délimitent les extrémités de l'intervalle de tolérance du positionnement du départ ou de la fin du cordon de soudure.

Avantageusement, chaque fenêtre comporte à proximité un marquage indiquant la référence du cordon de soudure apparaissant dans cette fenêtre.

En complément, le masque de contrôle peut comporter une base commune, et des parties amovibles comprenant des ouvertures de contrôle s'adaptant à des assemblages réalisés suivant des variantes.

En particulier, le masque de contrôle peut s'adapter sur le berceau d'un train roulant d'un véhicule automobile.

L'invention a aussi pour objet un moyen de contrôle pour le berceau d'un train roulant d'un véhicule automobile, qui comporte deux masques de contrôle comprenant l'une quelconque des caractéristiques précédentes, l'un permettant de contrôler la face supérieure de ce berceau, et l'autre la face inférieure.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un dessin présentant un masque de contrôle selon l'invention, positionné sur le dessus d'un berceau d'un véhicule automobile ;
- la figure 2 est une vue de détail d'une fenêtre de ce masque ;
- la figure 3 présente un cordon de soudure dont le positionnement est incorrecte ;
- la figure 4 présente un cordon de soudure dont la longueur est incorrect ; et
- la figure 5 présente un deuxième masque de contrôle positionné sur le dessous du berceau.

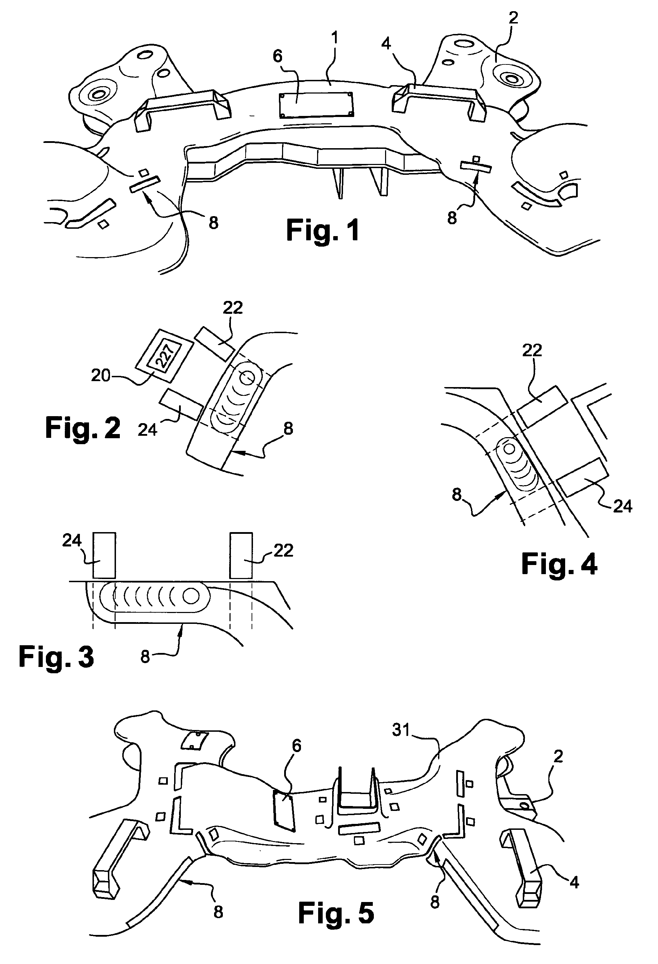

La figure 1 présente un masque de contrôle 1 positionné sur le dessus d'un berceau avant 2 d'un véhicule automobile, comportant une forme globalement plane, ce berceau étant réalisé par l'assemblage de deux tôles embouties et découpées formant les faces supérieure et inférieure, reliées entre elles par des cordons de soudure réalisés des deux côtés du berceau.

Le masque de contrôle 1 est formé par un moulage d'une résine armée, qui constitue une peau d'épaisseur sensiblement constante recouvrant au moins en partie le dessus du berceau en reproduisant ses formes, et recouvrant en particulier de près les zones comportant les cordons de soudure à contrôler. La résine armée permet de réaliser un masque 1 rigide et léger, comportant des dimensions stables.

Le masque 1 comprend un marquage 6, comportant des références liées aux types de berceaux à contrôler.

Le masque 1 comportant des poignées de manutention 4, est prévu pour se positionner avec précision sur le berceau 2, soit par une complémentarité des formes qui s'ajustent l'une sur l'autre, soit avec l'aide d'éléments de positionnement fixés dessus comme des pions, qui s'ajustent sur des contours de ce berceau.

Le masque 1 comporte des fenêtres 8 formant chacune une fente allongée suivant un axe, de largeur sensiblement constante, qui vient s'ajuster sur un cordon de soudure à contrôler. Le positionnement précis du masque 1 sur le berceau 2, permet d'ajuster les fenêtres 8 par rapport aux positions théoriques de réalisation des cordons de soudure, telles qu'elles sont définies par les études.

Chaque fenêtre 8 est réalisée de manière à ce que le cordon de soudure placé dans sa position théorique, se trouve centré sur l'axe de cette fenêtre dont la largeur est un peu supérieure à celle du cordon de soudure.

La figure 2 présente en détail une fenêtre 8, comportant sur le côté un marquage 20 indiquant la référence du cordon de soudure apparaissant dans cette fenêtre.

Près de chaque extrémité de la fenêtre 8, un repère de couleur 22, 24 formant chacun un trait épais, est tracé sur le côté de cette fenêtre perpendiculairement à son axe. Le premier repère de positionnement 22 représente par son épaisseur, la tolérance de positionnement du début du cordon de soudure, et le deuxième repère de longueur 24 représente de la même manière, la tolérance de positionnement de la fin du cordon de soudure.

Après avoir positionné le masque 1 sur le berceau 2, l'opérateur contrôle successivement pour chaque fenêtre 8, la présence d'un cordon de soudure, son positionnement latéral par rapport à la largeur de la fenêtre, et son positionnement axial par rapport aux repères de couleur 22, 24.

Les traits de couleur 22, 24 peuvent être remplacés par d'autres moyens de repérage visuel, comme une gravure, un autocollant ou un insert, indiquant de la même manière la tolérance de positionnement des extrémités du cordon de soudure.

En variante des fenêtres de contrôle 8 peuvent se trouver en bordure du masque 1, ces fenêtres ne disposant pas d'un contour fermé, comprennent alors un seul côté où sont regroupés les deux marquages de couleur 22, 24.

La figure 3 présente un cordon de soudure dont le départ se trouve en dehors de l'épaisseur du repère de positionnement 22, le départ de cette soudure se faisant trop tard lors de l'avance du robot de soudure. La figure 4 présente un autre cordon de soudure sont la fin se trouve en dehors de l'épaisseur du repère de longueur 24, l'arrêt de cette soudure se faisant trop tôt.

En constatant visuellement ces défauts, l'opérateur peut alors les enregistrer par exemple à l'aide d'un clavier situé à côté, en signalant à chaque fois le numéro du cordon de soudure et le type de défaut, de manière à pouvoir effectuer un réglage de la machine de soudure, et réaliser d'autres opérations comme par exemple des statistiques sur les fréquences de défaillances.

Par ailleurs, l'opérateur peut profiter du positionnement du masque 1 sur le berceau 2 pour effectuer d'autres opérations de contrôle, comme par exemple la présence de points de soudure électrique soudant les tôles ensemble. Ces autres contrôles peuvent se faire aussi dans des fenêtres spécifiques réalisées sur le masque 1, ou sur le pourtour de ce masque, les points de contrôle comprenant de la même manière des marquages de référence de ces points.

La figure 5 présente un berceau 2 qui a été retourné pour y positionner sur le dessous un masque inférieur 31, réalisé sur le même principe que le masque supérieur 1, avec des formes adaptées. L'opérateur peut ainsi effectuer un contrôle complet du berceau 2 sur ses deux faces, avec un même type de moyen de contrôle.

En complément, le masque 1 peut comporter des parties amovibles venant se fixer sur une base commune, permettant d'adapter ces parties amovibles à différents types de berceaux, de manière à pouvoir contrôler des berceaux assez proches mais comprenant des variantes. Ce masque comportant des parties amovibles permet de réduire les coûts, en utilisant une base commune qui est complétée suivant les besoins.

Le masque de contrôle 1 permet de réaliser une surveillance des cordons de soudure du berceau 2 de manière rapide et objective, les moyens visuels de contrôle 22, 24 positionnés avec précision directement sur le bord de chaque cordon de soudure, permettant à un opérateur ne bénéficiant pas d'une formation particulière, de contrôler de manière rigoureuse ces soudures.

En pratique, on a pu noter pour le contrôle d'un berceau, une division du temps nécessaire par un facteur de l'ordre de dix par rapport à un procédé de contrôle visuel sans masque de contrôle.

Un masque de contrôle 1 suivant l'invention est particulièrement adapté pour contrôler un élément de sécurité fabriqué en grande série, comme le berceau d'un train roulant d'un véhicule automobile, ou tout autre assemblage de tôles comprenant des formes complexes, embouties, découpées, puis soudées entre elles par des cordons de soudure. Le masque de contrôle peut s'appliquer notamment pour des traverses de trains roulants, des triangles de suspension, des châssis, des cadres ou tout autre assemblage réalisé par des procédés similaires.

## Revendications

1. Masque de contrôle de cordons de soudure d'un assemblage (2) constitué de tôles embouties et découpées, fixées entre elles par les cordons de soudure, **caractérisé en ce qu'**il comprend des formes adaptées pour se positionner de manière précise sur l'assemblage (2), et recouvrir de près cet assemblage au moins au niveau des cordons de soudure à vérifier, et **en ce qu'**il comporte des ouvertures (8) permettant de visualiser ces cordons de soudure au travers du masque (1), ainsi que des repères visuels de contrôle (22, 24) des bords des cordons de soudure définissant des tolérances, qui sont disposés à proximité de ces ouvertures.

2. Masque de contrôle selon la revendication 1, **caractérisé en ce qu'**il comporte des surfaces courbes qui s'ajustent de manière complémentaire sur celles de l'assemblage (2), pour effectuer le positionnement précis.

3. Masque de contrôle selon la revendication 1 ou 2, **caractérisé en ce qu'**il comporte des éléments de positionnement fixés dessus, qui s'ajustent sur des contours de l'assemblage (2) pour effectuer le positionnement précis.

4. Masque de contrôle selon l'une quelconque des revendications précédentes, **caractérisé en ce que** les ouvertures (8) ont une forme allongée suivant un axe, et comportent une largeur sensiblement constante qui est proche de celle du cordon de soudure.

5. Masque de contrôle selon la revendication 4, **caractérisé en ce que** les repères visuels de contrôle comportent un traçage (20) réalisé sur le côté des fenêtres (8), formant des traits sensiblement perpendiculaires à l'axe de la fenêtre, qui délimitent les extrémités de l'intervalle de tolérance du positionnement du départ ou de la fin du cordon de soudure.

6. Masque de contrôle selon l'une quelconque des revendications précédentes, caractérisé en ce chaque fenêtre (8) comporte à proximité un marquage (20) indiquant la référence du cordon de soudure apparaissant dans cette fenêtre.

7. Masque de contrôle selon l'une quelconque des revendications précédentes, **caractérisé en ce qu'**il comporte une base commune, et des parties amovibles comprenant des ouvertures de contrôle (8) s'adaptant à des assemblages (2) réalisés suivant des variantes.

8. Masque de contrôle selon l'une quelconque des revendications précédentes, **caractérisé en ce qu'**il est réalisé par moulage d'une résine armée.

9. Masque de contrôle selon l'une quelconque des revendications précédentes, **caractérisé en ce qu'**il s'adapte sur le berceau (2) d'un train roulant d'un véhicule automobile.

10. Moyen de contrôle pour le berceau (2) d'un train roulant d'un véhicule automobile, **caractérisé en ce qu'**il comporte deux masques de contrôle réalisés suivant l'une quelconque des revendications précédentes, l'un des masques (1) permettant de contrôler la face supérieure de ce berceau, et l'autre (31) la face inférieure.

## Patentansprüche

1. Kontrollmaske für Schweißnähte eines Zusammenbaus (2), aus tiefgezogenen und ausgeschnittenen Blechen bestehend, die durch Schweißnähte miteinander verbunden sind, **dadurch gekennzeichnet, dass** sie geeignete Formen umfasst, um präzise auf dem Zusammenbau (2) Stellung zu beziehen, und um diesen Zusammenbau zumindest im Bereich der zu prüfenden Schweißnähte nahe abzudecken, und dadurch, dass sie Öffnungen (8) umfasst, die es ermöglichen, diese Schweißnähte durch die Maske (1) hindurch darzustellen, sowie Sichtmerkmale zur Kontrolle (22, 24) der Ränder der Schweißnähte zum Definieren von Toleranzen, die in der Nähe dieser Öffnungen angeordnet sind.

2. Kontrollmaske nach Anspruch 1, **dadurch gekennzeichnet, dass** sie gekrümmte Oberflächen umfasst, die sich in ergänzender Form jenen des Zusammenbaus (2) anpassen, um die präzise Positionierung vorzunehmen.

3. Kontrollmaske nach Anspruch 1 oder 2, **dadurch gekennzeichnet, dass** sie Positionierelemente umfasst, die darauf befestigt sind, und die sich an Konturen des Zusammenbaus (2) anlegen, um die präzise Positionierung vorzunehmen.

4. Kontrollmaske nach irgendeinem der vorherigen Ansprüche, **dadurch gekennzeichnet, dass** die Öffnungen (8) eine längliche Form entlang einer Achse aufweisen und eine in etwa konstante Breite umfassen, die ähnlich jener der Schweißnaht ist.

5. Kontrollmaske nach Anspruch 4, **dadurch gekennzeichnet, dass** die Sichtmerkmale zur Kontrolle eine Kennzeichnung (20) umfassen, die seitlich an den Fenstern (8) angebracht sind und Striche bilden, die in etwa senkrecht zur Achse des Fensters verlaufen, und die die Enden des Toleranzintervalls für die Positionierung zu Beginn oder am Ende der Schweißnaht eingrenzen.

6. Kontrollmaske nach irgendeinem der vorherigen Ansprüche, **dadurch gekennzeichnet, dass** jedes Fenster (8) in der Nähe eine Kennzeichnung (20) umfasst, die die Referenz der Schweißnaht anzeigt, die in diesem Fenster erscheint.

7. Kontrollmaske nach irgendeinem der vorherigen Ansprüche, **dadurch gekennzeichnet, dass** sie eine gemeinsame Basis und abnehmbare Abschnitte mit Kontrollöffnungen (8) umfasst, die sich den Zusammenbauten (2) anpasst, die je nach Varianten hergestellt werden.

8. Kontrollmaske nach irgendeinem der vorherigen Ansprüche, **dadurch gekennzeichnet, dass** sie mittels Formguss eines verstärkten Harzes erzeugt wird.

9. Kontrollmaske nach irgendeinem der vorherigen Ansprüche, **dadurch gekennzeichnet, dass** sie sich einer Aufhängung (2) eines Achszusammenbaus eines Kraftfahrzeugs anpasst.

10. Kontrollmaske für die Aufhängung (2) eines Achszusammenbaus eines Kraftfahrzeugs, **dadurch gekennzeichnet, dass** sie zwei Kontrollmasken umfasst, die nach irgendeinem der vorherigen Ansprüche erzeugt werden, wobei mit einer der Masken (1) die Oberseite dieser Aufhängung, und mit der anderen (31) die Unterseite kontrolliert werden können.

## Claims

1. Mask for checking weld beads of an assembly (2) consisting of stamped and punched metal sheets attached together by weld beads, **characterised in that** it includes forms adapted to be precisely positioned on the assembly (2) and to closely cover said assembly at least at the weld beads to be checked, and **in that** it comprises openings (8) for observing said weld beads through the mask (1), as well as visual reference marks (22, 24) for checking the edges of the weld beads, said reference marks defining tolerances and being arranged near said openings.

2. Checking mask according to claim 1, **characterised in that** it comprises curved surfaces that adjust in a complementing manner on those of the assembly (2) to perform the precise positioning operation.

3. Checking mask according to claim 1 or 2, **characterised in that** it comprises positioning elements fixed on top of it, that adjust on the contours of the assembly (2) to perform the precise positioning operation.

4. Checking mask according to any one of the previous claims, **characterised in that** the openings (8) have a shape that extends along an axis, and have a substantially constant width which is close to that of the weld bead.

5. Checking mask according to claim 4, **characterised in that** the visual reference marks for checking comprise a tracing (20) made on the side of the windows (8), forming lines that are substantially perpendicular to the axis of the window, which define the ends of the tolerance interval for the positioning of the start or end of the weld bead.

6. Checking mask according to any one of the previous claims, **characterised in that** each window (8) comprises a nearby marking (20) indicating the reference of the weld bead appearing in this window.

7. Checking mask according to any one of the previous claims, **characterised in that** it comprises a common base, and removable parts comprising checking openings (8) adapting to assemblies (2) produced according to alternative embodiments.

8. Checking mask according to any one of the previous claims, **characterised in that** it is made by moulding a reinforced resin.

9. Checking mask according to any one of the previous claims, **characterised in that** it adapts on the cradle (2) of a running gear of a motor vehicle.

10. Means for checking the cradle (2) of a running gear of a motor vehicle, **characterised in that** it comprises two checking masks made according to any one of the previous claims, one of the masks (1) being used to check the upper surface of this cradle, and the other (31) being used to check the lower surface.
